# EUROPEAN PATENT APPLICATION

(11) **EP 4 723 710 A1**
(43) Date of publication of application: **08.04.2026**
(21) Application number: 23942738.8
(22) Date of filing: 27.06.2023
(51) Int. Cl.: H04W 12/08

(54) **NETWORK FUNCTION MANAGEMENT METHOD AND COMMUNICATION APPARATUS**

(71) Applicant: Huawei Technologies Co., Ltd., Shenzhen, Guangdong 518129 (CN)
(72) Inventor: XI, Yan, Shenzhen, Guangdong 518129 (CN); YAN, Xueqiang, Shenzhen, Guangdong 518129 (CN); ZHAO, Mingyu, Shenzhen, Guangdong 518129 (CN); XING, Weijun, Shenzhen, Guangdong 518129 (CN); WANG, Junfan, Shenzhen, Guangdong 518129 (CN); LI, Bo, Hangzhou, Zhejiang 310058 (CN); DENG, Shuiguang, Hangzhou, Zhejiang 310058 (CN)
(74) Representative: Goddar, Heinz J.
(86) International application number: PCT/CN2023/102553
(87) International publication number: WO 2025/000212

(57) **Abstract**

Embodiments of this application provide a network function management method and a communication apparatus. The method includes: A first device receives information about a second device, where the first device is a device in a blockchain, the second device is a network function entity, and the first device is configured to perform automated management on the second device according to a smart contract; and the first device writes the information about the second device into the blockchain. In this way, according to a blockchain technology, an NF instance and a service of the NF instance in network deployment are discovered according to a decentralization mechanism, and an NF instance and service discovery process is implemented in a distributed manner without affecting identity authentication or security, so that a system architecture is more secure and simple, and maintenance is more convenient.

## Description

### TECHNICAL FIELD

This application relates to the field of wireless communication technologies, and more specifically, to a network function (network function, NF) management method and a communication apparatus.

### BACKGROUND

Currently, the 5th generation core network (5th generation core network, 5GC) adopts service-based decoupling, an NF or a network function service (network function service, NFS) is more refined, and the network obtains an agility capability while increasing management complexity. In this way, a network repository function (network repository function, NRF) is defined in the 3rd generation partnership project (3rd generation partnership project, 3GPP) to be responsible for automated management of all NFs, including registration, discovery, status detection, and the like. After starting to operate, the NF proactively reports information about the NFS of the NF to the NRF and discovers a peer NFS through the NRF. On the 5GC network, a centralized NRF architecture is commonly used, that is, a plurality of NRFs are interconnected. However, for the centralized architecture, if one NRF fails or is attacked, all NFs managed by the NRF (or all NFs registered with the NRF) have a risk of being lost or tampered with, that is, are prone to a risk of a single-point failure or a single-point attack. In addition, configuration is complex because the plurality of NRFs need to be configured in a coordinated manner.

Therefore, constructing a simple and secure system architecture of an NF instance and a service of the NF instance is an urgent problem to be resolved.

### SUMMARY

Embodiments of this application provide an NF management method. An NF instance and a service of the NF instance in a network are discovered according to a decentralization mechanism, and an NF instance and service discovery process is implemented in a distributed manner without affecting identity authentication or security, so that a system architecture is more secure and simple, and maintenance is more convenient.

According to a first aspect, an NF management method is provided. The method may be performed by a first device, or may be performed by a component (for example, a chip or a circuit) of the first device. This is not limited. For ease of description, the following uses an example in which the method is performed by the first device for description.

The method may include: A first device receives information about a second device, where the first device is a device in a blockchain, the second device is a network function entity, and the first device is configured to perform automated management on the second device according to a smart contract; and the first device writes the information about the second device into the blockchain.

In the foregoing solution, the first device writes the information about the second device into the blockchain, so that an NF instance and service discovery process is implemented in a distributed manner according to a decentralization mechanism without affecting identity authentication or security, a system architecture is more secure and simple, and maintenance is more convenient.

In a possible implementation, performing automated management on the second device includes any one of the following: performing account provisioning on the second device, registering the second device, discovering a target device of the second device, subscribing to and notifying a target subscription device of the second device, and performing remote attestation on the second device.

In a possible implementation, the information about the second device includes registration information and signature information, the signature information is a signature of the information about the second device by using a private key of the second device, the information about the second device is used to register the second device, and the method further includes: The first device verifies the signature information by using an obtained public key of the second device. That the first device writes the information about the second device into the blockchain includes: When the first device successfully verifies the signature information, the first device writes registration information into the blockchain, where the registration information includes an area to which the second device belongs, an identifier of the blockchain, an identifier of the second device, a type of the second device, a status of the second device, and at least one of the following information: a full qualified domain name of the second device, an address of the second device, an operator to which the second device belongs, a service that can be supported by the second device, or a dedicated registration parameter of the type of the second device.

In the foregoing solution, based on a network architecture in which an NF instance and a service of the NF instance in a network are discovered by using a blockchain technology, the NF is registered, so that a problem of a single-point failure or a single-point attack can be effectively avoided, and NF management is more secure and convenient without affecting identity authentication or security.

In a possible implementation, after the second device completes registration, the information about the second device includes the identifier of the second device, updated registration information, and updated signature information.

In a possible implementation, the information about the second device includes the status of the second device, and the status of the second device is an undiscoverable state. That the first device writes the information about the second device into the blockchain includes: The first device writes the status of the second device that is in the undiscoverable state into the blockchain.

In the foregoing solution, based on a network architecture in which an NF instance and a service of the NF instance in a network are discovered by using a blockchain technology, a status of the NF is managed, so that a problem of a single-point failure or a single-point attack can be effectively avoided, and NF management is more secure and convenient without affecting identity authentication or security.

In a possible implementation, the information about the second device includes a public key of the second device, an identifier of the second device, and a measurement reference value of the second device. That the first device receives the information about the second device includes: The first device receives the information about the second device from the network management device. The information about the second device is used to perform account provisioning on the second device.

In the foregoing solution, based on a network architecture in which an NF instance and a service of the NF instance in a network are discovered by using a blockchain technology, account (account) provisioning is performed on the NF, so that a problem of a single-point failure or a single-point attack can be effectively avoided, and NF management is more secure and convenient without affecting identity authentication or security.

In a possible implementation, the information about the second device includes query information, and the information about the second device is used to discover a target device of the second device. The method further includes: The first device queries the target device based on the query information; and the first device sends an address of the target device and a public key of the target device. The query information includes at least one of the following information: an area to which the device belongs, an identifier of the blockchain, a type of the device, an address of the device, an operator to which the device belongs, a name of a service that can be supported by the device, and a dedicated filtering parameter of the device.

In the foregoing solution, based on a network architecture in which an NF instance and a service of the NF instance in a network are discovered by using a blockchain technology, the target device of the NF is discovered, so that a problem of a single-point failure or a single-point attack can be effectively avoided, and NF management is more secure and convenient without affecting identity authentication or security.

In a possible implementation, the information about the second device includes an identifier and a target subscription device parameter of the second device, the information about the second device is used to subscribe to a target subscription device of the second device, and the target subscription device parameter includes at least one of the following information: an area to which the target subscription device belongs, an identifier of the blockchain, a type of the target subscription device, an address of the target subscription device, an operator to which the target subscription device belongs, a list of services that can be supported by the target subscription device, and a dedicated registration parameter of the type of the target subscription device.

In the foregoing solution, based on a network architecture in which an NF instance and a service of the NF instance in a network are discovered by using a blockchain technology, the target subscription device of the NF is subscribed to, so that a problem of a single-point failure or a single-point attack can be effectively avoided, and NF management is more secure and convenient without affecting identity authentication or security.

In a possible implementation, when the first device determines that the target subscription device parameter changes, the method further includes: The first device sends notification information. The notification information indicates that the target subscription device parameter changes, and the notification information includes an identifier of the target subscription device and a modified field in the target subscription device parameter.

In the foregoing solution, when the target subscription device of the NF is changed (for example, information about the target subscription device in the blockchain is modified or newly added), the first device can notify the NF in time.

In a possible implementation, the information about the second device is attestation response information encrypted by the second device by using a private key of the second device, the attestation response information includes a first random number and a measurement value of the second device, and the information about the second device is used to perform remote attestation on the second device. Before the first device receives the information about the second device, the method further includes: The first device obtains a public key of the second device; and the first device sends, to the second device, remote attestation request information encrypted by using the public key of the second device, where the remote attestation request information includes a second random number.

In a possible implementation, that the first device writes the information about the second device into the blockchain includes: The first device decrypts the attestation response information by using the public key of the second device, to obtain the first random number and the measurement value of the second device. The first device measures the first random number, the second random number, the measurement reference value that is of the second device and that is stored in the first device, and the measurement value of the second device, and writes a measurement result into the blockchain.

In the foregoing solution, based on a network architecture in which an NF instance and a service of the NF instance in a network are discovered by using a blockchain technology, remote attestation is performed on the NF, so that a problem of a single-point failure or a single-point attack can be effectively avoided, and NF management is more secure and convenient without affecting identity authentication or security.

In a possible implementation, that the first device writes the information about the second device into the blockchain includes: The first device writes the information about the second device into the blockchain in the following data format: a data initiator, a data receiver, a data transaction type, a timestamp, the identifier of the blockchain, a validity period, data transaction content, and a data signature. The data transaction type includes any one of the following: account provisioning of the second device, registration of the second device, discovery of a target device of the second device, subscription and notification of the target subscription device of the second device, and remote attestation of the second device.

In a possible implementation, the method further includes: The first device sends response information, where the response information indicates that the first device successfully receives the information about the second device, or indicates that the information about the second device has been written into the blockchain.

According to a second aspect, an NF management method is provided. The method may be performed by a second device, or may be performed by a component (for example, a chip or a circuit) of the second device. This is not limited. For ease of description, the following uses an example in which the method is performed by the second device for description.

The method may include: The second device determines information about the second device; and the second device sends the information about the second device to a first device, where the first device is a device in a blockchain, the second device is a network function entity, and the first device is configured to perform automated management on the second device according to a smart contract.

In the foregoing solution, the second device sends the information about the second device to the first device (the device in the blockchain), and the first device writes the corresponding information into the blockchain, so that an NF instance and service discovery process is implemented in a distributed manner according to a decentralization mechanism without affecting identity authentication or security, a system architecture is more secure and simple, and maintenance is more convenient.

In a possible implementation, performing automated management on the second device includes any one of the following: performing account provisioning on the second device, registering the second device, discovering a target device of the second device, subscribing to and notifying a target subscription device of the second device, and performing remote attestation on the second device.

In a possible implementation, the information about the second device includes registration information and signature information, the information about the second device is used to register the second device, the signature information is a signature of the information about the second device by using a private key of the second device, and the registration information includes an area to which the second device belongs, an identifier of the blockchain, an identifier of the second device, a type of the second device, a status of the second device, and at least one of the following information: a full qualified domain name of the second device, an address of the second device, an operator to which the second device belongs, a service that can be supported by the second device, or a dedicated registration parameter of the type of the second device.

In a possible implementation, after the second device completes registration, the information about the second device includes the identifier of the second device, updated registration information, and updated signature information.

In a possible implementation, the information about the second device includes the status of the second device, and the status of the second device is an undiscoverable state.

In a possible implementation, the information about the second device includes query information, the information about the second device is used to discover a target device of the second device, and the query information includes at least one of the following information: an area to which the device belongs, an identifier of the blockchain, a type of the device, an address of the device, an operator to which the device belongs, a name of a service that can be supported by the device, and a dedicated filtering parameter of the device. Response information includes the address of the device and a public key of the device.

In a possible implementation, the information about the second device includes an identifier and a target subscription device parameter of the second device, the information about the second device is used to subscribe to a target subscription device of the second device, and the target subscription device parameter includes at least one of the following information: an area to which the target subscription device belongs, an identifier of the blockchain, a type of the target subscription device, an address of the target subscription device, an operator to which the target subscription device belongs, a list of services that can be supported by the target subscription device, and a dedicated registration parameter of the type of the target subscription device.

In a possible implementation, the method further includes: The second device receives notification information from the first device. The notification information indicates that the target subscription device parameter changes, and the notification information includes an identifier of the target subscription device and a modified field in the target subscription device parameter.

In a possible implementation, the information about the second device is attestation response information encrypted by the second device by using a private key of the second device, the attestation response information includes a first random number and a measurement value of the second device, and the information about the second device is used to perform remote attestation on the second device. Before the second device sends the information about the second device to the first device, the method further includes: The second device receives, from the first device, remote attestation request information encrypted by using a public key of the second device, where the remote attestation request information includes a second random number.

In a possible implementation, the second device receives response information, where the response information indicates that the first device successfully receives the information about the second device, or indicates that the information about the second device has been written into the blockchain.

For beneficial effect corresponding to the method provided in the second aspect, refer to the beneficial effect corresponding to the method shown in the first aspect. Details are not described herein again.

According to a third aspect, a communication system is provided. The system includes: A second device sends information about the second device to a first device, where the first device is a device in a blockchain, the second device is a network function entity, and the first device is configured to perform automated management on the second device according to a smart contract; and the first device writes the information about the second device into the blockchain; and the first device sends response information to the second device, where the response information indicates that the information about the second device has been written into the blockchain.

In the foregoing solution, the first device writes the information about the second device into the blockchain, so that an NF instance and service discovery process is implemented in a distributed manner according to a decentralization mechanism without affecting identity authentication or security, a system architecture is more secure and simple, and maintenance is more convenient.

According to a fourth aspect, a communication apparatus is provided, including a unit configured to perform the method according to the first aspect. The communication apparatus may be a first device, or may be implemented by a chip or a circuit disposed in the first device. This is not limited in this application.

The communication apparatus includes:
a transceiver unit, configured to receive information about a second device, where a communication device is a device in a blockchain, the second device is a network function entity, and the communication device is configured to perform automated management on the second device according to a smart contract; and a processing unit, configured to write the information about the second device into the blockchain.

In a possible implementation, performing automated management on the second device includes any one of the following: performing account provisioning on the second device, registering the second device, discovering a target device of the second device, subscribing to and notifying a target subscription device of the second device, and performing remote attestation on the second device.

In a possible implementation, the information about the second device includes registration information and signature information, the signature information is a signature of the information about the second device by using a private key of the second device, the information about the second device is used to register the second device. The processing unit is further configured to verify the signature information by using an obtained public key of the second device. When the communication device successfully verifies the signature information, the processing unit is further configured to write the registration information into the blockchain, where the registration information includes an area to which the second device belongs, an identifier of the blockchain, an identifier of the second device, a type of the second device, a status of the second device, and at least one of the following information: a full qualified domain name of the second device, an address of the second device, an operator to which the second device belongs, a service that can be supported by the second device, or a dedicated registration parameter of the type of the second device.

In a possible implementation, after the second device completes registration, the information about the second device includes the identifier of the second device, updated registration information, and updated signature information.

In a possible implementation, the information about the second device includes the status of the second device, and the status of the second device is an undiscoverable state. The processing unit is further configured to write the status of the second device that is in the undiscoverable state into the blockchain.

In a possible implementation, the information about the second device includes a public key of the second device, an identifier of the second device, and a measurement reference value of the second device. The transceiver unit is further configured to receive the information about the second device from a network management device. The information about the second device is used to perform account provisioning on the second device.

In a possible implementation, the information about the second device includes query information, and the information about the second device is used to discover a target device of the second device. The processing unit is further configured to query the target device based on the query information. The transceiver unit is further configured to send an address of the target device and a public key of the target device. The query information includes at least one of the following information: an area to which the device belongs, an identifier of the blockchain, a type of the device, an address of the device, an operator to which the device belongs, a name of a service that can be supported by the device, and a dedicated filtering parameter of the device.

In a possible implementation, the information about the second device includes an identifier and a target subscription device parameter of the second device, the information about the second device is used to subscribe to a target subscription device of the second device, and the target subscription device parameter includes at least one of the following information: an area to which the target subscription device belongs, an identifier of the blockchain, a type of the target subscription device, an address of the target subscription device, an operator to which the target subscription device belongs, a list of services that can be supported by the target subscription device, and a dedicated registration parameter of the type of the target subscription device.

In a possible implementation, when the communication device determines that the target subscription device parameter changes, the transceiver unit is further configured to send notification information. The notification information indicates that the target subscription device parameter changes, and the notification information includes an identifier of the target subscription device and a modified field in the target subscription device parameter.

In a possible implementation, the information about the second device is attestation response information encrypted by the second device by using a private key of the second device, the attestation response information includes a first random number and a measurement value of the second device, and the information about the second device is used to perform remote attestation on the second device. The processing unit is further configured to obtain a public key of the second device. The transceiver unit is further configured to send, to the second device, remote attestation request information encrypted by using the public key of the second device, where the remote attestation request information includes a second random number.

In a possible implementation, the processing unit is further configured to decrypt the attestation response information by using the public key of the second device, to obtain the first random number and the measurement value of the second device. The processing unit is further configured to: measure the first random number, the second random number, the measurement reference value that is of the second device and that is stored in the first device, and the measurement value of the second device, and write a measurement result into the blockchain.

In a possible implementation, the processing unit is further configured to write the information about the second device into the blockchain in the following data format: a data initiator, a data receiver, a data transaction type, a timestamp, the identifier of the blockchain, a validity period, data transaction content, and a data signature.

The data transaction type includes any one of the following: account provisioning of the second device, registration of the second device, discovery of a target device of the second device, subscription and notification of the target subscription device of the second device, and remote attestation of the second device.

In a possible implementation, the transceiver unit is further configured to send response information. The response information indicates that the information about the second device has been written into the blockchain.

For explanations and beneficial effect of related content of the communication apparatus provided in the fourth aspect, refer to the method shown in the first aspect. Details are not described herein again.

According to a fifth aspect, a communication apparatus is provided, including a unit configured to perform the method according to the second aspect. The communication apparatus may be a second device, or may be implemented by a chip or a circuit disposed in the second device. This is not limited in this application.

The communication apparatus includes:
a processing unit, configured to determine information about a communication device; and a transceiver unit, configured to send the information about the communication device to a first device, where the first device is a device in a blockchain, the communication device is a network function entity, and the first device is configured to perform automated management on the communication device according to a smart contract.

In a possible implementation, performing automated management on the communication device includes any one of the following: performing account provisioning on the communication device, registering the communication device, discovering a target device of the communication device, subscribing to and notifying a target subscription device of the communication device, and performing remote attestation on the communication device.

In a possible implementation, the information about the communication device includes registration information and signature information, the information about the communication device is used to register the communication device, the signature information is a signature of the information about the communication device by using a private key of the communication device, and the registration information includes an area to which the communication device belongs, an identifier of the blockchain, an identifier of the communication device, a type of the communication device, a status of the communication device, and at least one of the following information: a full qualified domain name of the communication device, an address of the communication device, an operator to which the communication device belongs, a service that can be supported by the communication device, and a dedicated registration parameter of the type of the communication device.

In a possible implementation, after the communication device completes registration, the information about the communication device includes the identifier of the communication device, updated registration information, and updated signature information.

In a possible implementation, the information about the communication device includes the status of the communication device, and the status of the communication device is an undiscoverable state.

In a possible implementation, the information about the communication device includes query information, the information about the communication device is used to discover a target device of the communication device, and the query information includes at least one of the following information: an area to which the device belongs, an identifier of the blockchain, a type of the device, an address of the device, an operator to which the device belongs, a name of a service that can be supported by the device, and a dedicated filtering parameter of the device. Response information includes the address of the device and a public key of the device.

In a possible implementation, the information about the communication device includes an identifier and a target subscription device parameter of the communication device, the information about the communication device is used to subscribe to a target subscription device of the communication device, and the target subscription device parameter includes at least one of the following information: an area to which the target subscription device belongs, an identifier of the blockchain, a type of the target subscription device, an address of the target subscription device, an operator to which the target subscription device belongs, a list of services that can be supported by the target subscription device, and a dedicated registration parameter of the type of the target subscription device.

In a possible implementation, the transceiver unit is further configured to receive notification information from the first device. The notification information indicates that the target subscription device parameter changes, and the notification information includes an identifier of the target subscription device and a modified field in the target subscription device parameter.

In a possible implementation, the information about the communication device is attestation response information encrypted by the communication device by using a private key of the communication device, the attestation response information includes a first random number and a measurement value of the second device, and the information about the communication device is used to perform remote attestation on the communication device. The transceiver unit is further configured to receive, from the first device, remote attestation request information encrypted by using a public key of the communication device, where the remote attestation request information includes a second random number.

In a possible implementation, the transceiver unit is further configured to receive response information. The response information indicates that the first device successfully receives the information about the communication device, or indicates that the information about the communication device has been written into the blockchain.

For explanations and beneficial effect of related content of the communication apparatus provided in the fifth aspect, refer to the method shown in the second aspect. Details are not described herein again.

According to a sixth aspect, a communication apparatus is provided. The apparatus includes: a memory, configured to store a program; and at least one processor, configured to execute the computer program or instructions stored in the memory, to perform the method according to any one of the possible implementations of the first aspect to the third aspect.

In an implementation, the apparatus is a first device.

In another implementation, the apparatus is a chip, a chip system, or a circuit used in the first device.

According to a seventh aspect, this application provides a processor configured to perform the methods according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable medium stores program code executed by a device, and the program code includes the method used to perform any one of the possible implementations of the first aspect to the third aspect.

According to a ninth aspect, a computer program product including instructions is provided. When the computer program product runs on a computer, the computer is enabled to perform the method according to any one of the possible implementations of the first aspect to the third aspect.

According to a tenth aspect, a chip is provided. The chip includes a processor and a communication interface. The processor reads, through the communication interface, instructions stored in a memory, to perform the method according to any one of the possible implementations of the first aspect to the third aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the possible implementations of the first aspect to the third aspect.

### BRIEF DESCRIPTION OF DRAWINGS

FIG. 1 is diagram of a network architecture 100 to which embodiments of this application are applicable;
FIG. 2 is a schematic flowchart of an NF management method 200 according to an embodiment of this application;
FIG. 3 is a schematic flowchart of an NF management method 300 according to an embodiment of this application;
FIG. 4 is a schematic flowchart of an NF management method 400 according to an embodiment of this application;
FIG. 5 is a schematic flowchart of an NF management method 500 according to an embodiment of this application;
FIG. 6 is a schematic flowchart of an NF management method 600 according to an embodiment of this application;
FIG. 7 is a block diagram of a communication apparatus 700 according to an embodiment of this application;
FIG. 8 is a block diagram of another communication apparatus 800 according to an embodiment of this application; and
FIG. 9 is a diagram of a chip system 900 according to an embodiment of this application.

### DESCRIPTION OF EMBODIMENTS

The following describes technical solutions of this application with reference to accompanying drawings.

First, concepts such as a blockchain and a smart contract in embodiments of this application are briefly described.

### 1. Blockchain

A blockchain technology is used to implement a chained data structure formed by sequentially connecting data and information blocks (blocks) in a chronological order, and to implement distributed storage that cannot be tampered with and cannot be forged in a cryptographic manner. Generally, data and information in the blockchain are referred to as "transactions (transactions)".

The blockchain technology is not a single technology, but an integrated system as point-to-point transmission, consensus mechanism, distributed data storage, and cryptographic principles. The system has technical features of full disclosure and anti-tampering.

1. Peer-to-peer transmission: Nodes participating in the blockchain are independent and equivalent, and synchronization of data and information is implemented between nodes by using a peer-to-peer transmission technology. The nodes may be different physical machines, or may be different instances on a cloud.

2. Consensus mechanism: The consensus mechanism in the blockchain is a process in which nodes participating in a plurality of parties reach an agreement on specific data and information through interaction between nodes according to a preset logical rule. The consensus mechanism needs to depend on a well-designed algorithm. Therefore, performance, a consensus latency, a consumed computing resource, a consumed transmission resource, and the like vary between different consensus mechanisms.

3. Distributed data storage: The distributed storage in the blockchain means that nodes participating in the blockchain each store independent and complete data, ensuring that the data storage is fully open among the nodes. Different from conventional distributed data storage in which data is divided into a plurality of copies for backup or synchronous storage according to a specific rule, the distributed data storage in the blockchain implements highly consistent data storage based on a consensus between peer-to-peer and independent nodes in the blockchain.

4. Cryptography principle: The blockchain usually implements trusted information dissemination, verification, and the like by using an asymmetric encryption technology.

A concept of "block" is to organize one or more data records in a form of a "block", and a size of the "block" may be customized in an actual application scenario. A "chain" is a data structure, and the data structure connects "blocks" that store data records in a chronological order by using a hash (hash) technology. In the blockchain, each "block" includes two parts: a "block header" and a "block body". The "block body" includes transaction records packed into the "block". The "block header" includes root hashes of all transactions in the "block" and hashes in a previous "block". The data structure of the blockchain ensures that data stored on the blockchain cannot be tampered with.

### 2. Smart contract

The smart contract is a set of code and data, and may also be referred to as a "programmable contract". Generally, the smart contract is defined by using program code, and a running condition is preset. When the running condition is triggered, behavior is performed. "Smart" is smart during execution. In other words, if a preset condition is met, the contract automatically runs.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

Currently, service-oriented decoupling is implemented on the 5GC network, and NFs or NFSs are more refined. This increases management complexity while network agility is achieved. Therefore, 3GPP defines the NRF to be responsible for automated management of all NFSs, including registration, discovery, and status detection. After starting to operate, the NF proactively reports information about the NFS of the NF to the NRF and discovers a peer NFS through the NRF. On the 5GC network, a centralized NRF architecture is used, that is, a plurality of NRFs are interconnected. However, for the centralized architecture, if one NRF fails or is attacked, all NFs managed by the NRF (or all NFs registered with the NRF) have a risk of being lost or tampered with, that is, are prone to a risk of a single-point failure or a single-point attack. In addition, configuration is complex because the plurality of NRFs need to be configured in a coordinated manner.

This application provides an NF management method. The method is according to a blockchain technology, and discovers an NF instance and a service of the NF instance in a network according to a decentralization mechanism. Because the blockchain technology has technical features such as anti-tampering and security, when identity authentication or security is not affected, an NF instance and service discovery process can be implemented in a distributed manner, so that a system architecture is more secure and simple, and maintenance is more convenient.

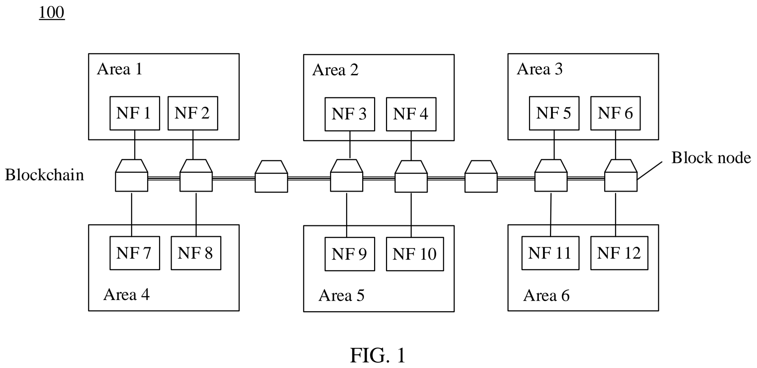

A network architecture to which this application is applicable is described below with reference to FIG. 1.

For example, FIG. 1 is a diagram of a network architecture 100.

As shown in FIG. 1, the network architecture 100 includes a plurality of block nodes (or referred to as blockchain nodes) and a plurality of NFs. The plurality of block nodes form a blockchain (blockchain, BC), and the plurality of NFs may be respectively located in different areas. As shown in FIG. 1, an area 1 includes an NF 1 and an NF 2, an area 2 includes an NF 3 and an NF 4, an area 3 includes an NF 5 and an NF 6, an area 4 includes an NF 7 and an NF 8, an area 9 includes an NF 9 and an NF 10, and an area 6 includes an NF 11 and an NF 12. Each NF is directly connected to the blockchain. A block node that is in the blockchain and that is connected to the NF can send data of the NF to another node in the blockchain, to implement data sharing. It should be noted that in embodiments of this application, a "node" and a "device" have a same meaning.

In addition, there is no centralized hardware or management organization in the blockchain, rights and obligations of the nodes are equal, and damage or loss of any node does not affect operation of the entire blockchain. Therefore, the blockchain has a feature of being decentralized. Mutual trust is not required for data exchange between nodes in the blockchain. An operation rule of the entire blockchain is open and transparent, and all data content is open. Therefore, within a rule range and a time range of the blockchain, a node cannot deceive another node, and a blockchain has a feature of being trustless. A total data block of the blockchain is jointly maintained by all nodes having a maintenance function in the entire system, and any one of these nodes having the maintenance function can participate. Therefore, the blockchain has a feature of collective maintenance. The blockchain enables each participating node to obtain a copy of a complete database in a form of a database. Unless more than 51% of the nodes in the entire network can be controlled at the same time, modification to the database on a single node is invalid and cannot affect data content on other nodes. Therefore, the blockchain has a reliable database.

In this application, the block node in the blockchain may be a private node or an operator network node (for example, a base station device or a core network device), or may be a station (station) deployed by an industry organization, a group, or an individual.

In this application, the NF may be a user plane function (user plane function, UPF) network element, an access and mobility management function (access and mobility management function, AMF) network element, a session management function (session management function, SMF) network element, a network exposure function (network exposure function, NEF) network element, a policy control function (policy control function, PCF) network element, a unified data management (unified data management, UDM) network element, an application function (application function, AF) network element, an authentication server function (authentication server function, AUSF) network element, a network slice selection function (network slice selection function, NSSF) network element, and the like. This is not limited in this application. In this application, the UPF network element, the AMF network element, the SMF network element, the NEF network element, the PCF network element, the UDM network element, the AF network element, the AUSF network element, and the NSSF network element are respectively referred to as a UPF, an AMF, an SMF, an NEF, a PCF, a UDM, an AF, an AUSF and an NSSF for short.

The following briefly describes the foregoing network elements.
1. UPF: The UPF mainly provides user plane functions such as user packet forwarding and processing, a connection to a data network (data network, DN), a session anchor, and quality of service (quality of service, QoS) policy execution. For example, the UPF may receive user plane data from the DN, and send the user plane data to a terminal device via an access network (access network, AN) device. The UPF may alternatively receive user plane data from the terminal device via the AN device, and forward the user plane data to the DN.
2. AMF: The AMF is mainly for functions such as access control, mobility management, and attachment and detachment.
3. SMF: The SMF is mainly responsible for session management (such as session establishment, modification, and release), internet protocol (internet protocol, IP) address allocation and management, UPF selection and control, and the like.
4. NEF: The NEF is mainly used for securely exposing, to the outside, a service, a capability, and the like that are provided by a 3GPP network function.
5. PCF: The PCF is mainly used for guiding a unified policy framework for network behavior, and provide policy rule information and the like for a control plane network element (for example, the AMF or the SMF).
6. UDM: The UDM is mainly used for subscription data management of UE, including storage and management of a UE identifier, access authorization of the UE, and the like.
7. AF: The AF is mainly configured to provide a service for a 3GPP network, for example, interact with the PCF to perform policy control.
8. AUSF: The AUSF is mainly used for user authentication and the like, to implement 3GPP and non-3GPP access authentication.
9. NSSF: The NSSF is mainly configured to determine, based on slice selection assistance information of the UE, subscription information, and the like, a network slice instance that the UE is allowed to access.

It should be understood that functions or network elements such as the AMF, the SMF, the UPF, the PCF, the UDM, the NEF, the AF, the AUSF and the NSSF may be understood as network elements configured to implement different functions, for example, may be combined as required to form a network slice. These network elements may be independent devices, or may be integrated into a same device to implement different functions, or may be network elements in a hardware device, or may be software functions running on dedicated hardware, or may be instantiated virtualization functions on a platform (for example, a cloud platform). Specific forms of the network elements are not limited in this application.

One or more services may be obtained through division into the network elements or the functions. Further, a service that is independent of a network function may occur. In this application, instances of the functions, instances of services included in the functions, or instances of the services that exist independently of network functions may be referred to as service instances.

It may be understood that, the term "and/or" in this specification merely describes an association relationship between associated objects, and indicates that three relationships may exist. For example, A and/or B may indicate the following three cases: Only A exists, both A and B exist, and only B exists. In addition, the character "/" in this specification usually indicates an "or" relationship between the associated objects.

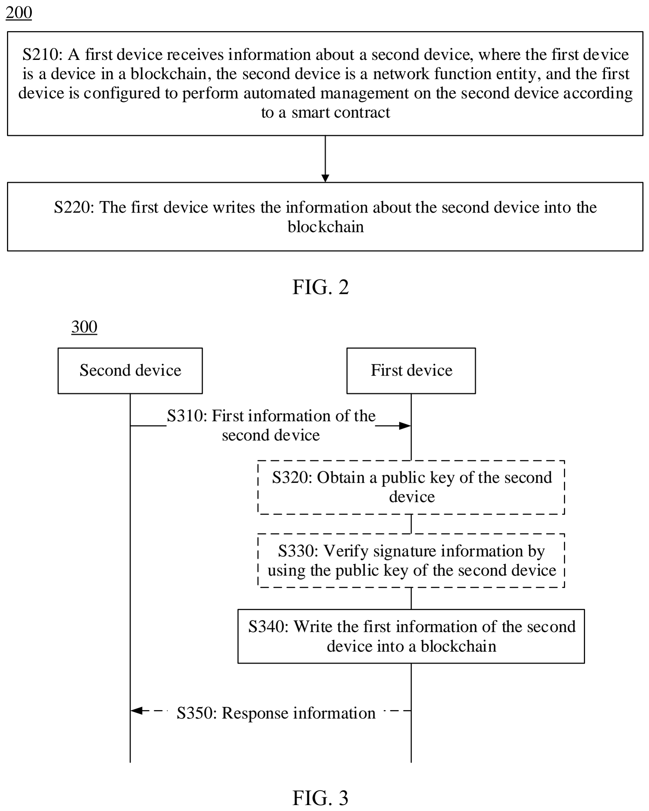

The following describes in detail an NF management method provided in this application with reference to FIG. 2.

FIG. 2 is a diagram of an NF management method 200 according to an embodiment of this application.

S210: A first device receives information about a second device.

For example, the first device is a device in a blockchain. It should be understood that the first device may be a component that runs a blockchain program, and the first device may run on a physical machine, a virtual machine, a container, or the like. The first device may be deployed together with an existing NF, or the first device may be independently deployed, or the like. The first device is not limited in this application.

It should be understood that the device in the blockchain may also be referred to as a blockchain node or a block node. For example, the device in the blockchain may be the block node in FIG. 1.

For example, the second device is an NF. For example, the second device may be an AMF, a UDM, a PCF, or the like. For another example, the second device may be any one of the NF 1 to the NF 12 in FIG. 1. The second device is not limited in this application.

The first device is configured to perform automated management on the second device according to a smart contract.

It should be understood that, that the first device is configured to perform automated management on the second device according to the smart contract may be understood as that the first device located in the blockchain can perform at least a corresponding function of an NRF in the 5GC network, to perform automated management on the second device.

For example, that the first device performs automated management on the second device may include any one of the following:
perform account (account) provisioning on the second device, registering (registering) on the second device, discovering (discovering) a target device of the second device, subscribing (subscribing) to and notifying (notifying) a target subscription device of the second device, and performing remote attestation (attestation) on the second device.

It should be noted that the foregoing automated management performed by the first device on the second device is merely an example. This is not limited in this application.

In a possible implementation, the first device receives the information about the second device from a third device. Correspondingly, the third device sends the information about the second device to the first device. The information about the second device is used to perform account provisioning on the second device.

For example, the third device may be a network management device. For example, the third device is an operation, administration, and maintenance (operation, administration and maintenance, OAM) device or another device having a network management function.

In this case, the information about the second device includes an identifier of the second device, a public key of the second device, and a measurement reference value of the second device. The measurement reference value of the second device is used to verify reliability and integrity of the device.

Perform account provisioning on the second device may be understood as storing public information of the second device (NF) in the blockchain, to verify an identity of the NF during subsequent NF registration.

In a possible implementation, the first device receives the information about the second device from the second device. Correspondingly, the second device sends the information about the second device to the first device. The information about the second device is used to perform automated management on the second device.

It should be understood that, before the second device sends the information about the second device to the first device, the second device determines the information about the second device. Generally, the second device determines the information about the second device based on a specific requirement.

The information about the second device includes the following different content based on different functions of the second device (or different requirements of the second device):

In a possible implementation, the information about the second device is used to perform registration management on the second device.

For example, performing registration management on the second device may include scenarios such as registering the second device, updating registration information of the second device, and deregistering (or cancelling) the second device.

In a scenario in which the second device is registered, the information about the second device includes registration information and signature information.

Registering the second device may be understood as verifying an identity of the second device, to register the second device with a network, and mark the second device as a device that can be discovered by another device (for example, an NF).

Specifically, the signature information is a signature of the information about the second device by using a private key of the second device. The registration information includes an area to which the second device belongs, an identifier of the blockchain, an identifier of the second device, a type of the second device, a status of the second device, and at least one of the following information: a full qualified domain name of the second device, an address of the second device, an operator to which the second device belongs, a service that can be supported by the second device, or a dedicated registration parameter of the type of the second device.

It should be understood that the second device can support one or more services, and services supported by different second devices may be different or the same.

Specifically, a dedicated registration parameter of the type of the second device is a dedicated parameter of the second device. It should be understood that different types of second devices have different dedicated registration parameters.

In a scenario in which the registration information of the second device is updated, the information about the second device includes the identifier of the second device, updated registration information, and the signature information.

Updating the registration information of the second device may be understood as updating the registration information of the second device stored in the blockchain.

In a scenario in which the second device is deregistered (or cancelled), the information about the second device includes the identifier of the second device, the status of the second device, and the signature information. The status of the second device is an undiscoverable (undiscoverable) state.

Deregistering (or cancelling) the second device may be understood as modifying the status of the second device to the undiscoverable state (or an unavailable state) in the blockchain, or cancelling the second device from the network.

In a possible implementation, the information about the second device is used to perform account provisioning on the second device.

In this case, the information about the second device includes the public key of the second device, the identifier of the second device, and the measurement reference value of the second device. The measurement reference value of the second device is a trust measurement value stored in a platform configuration register (platform configuration register, PCR), and is used to verify device integrity and protect data.

In a possible implementation, the information about the second device is used to discover the target device of the second device. The target device of the second device is a device that meets a query condition (query information) of the second device. Discovering the target device of the second device may be understood as querying, based on the query information, the device that meets the query condition (the query information) of the second device in information about a plurality of NFs stored in a blockchain, and the device is the target device of the second device.

In this case, the information about the second device includes the query information, and the query information includes at least one of the following information: an area to which the device belongs, an identifier of the blockchain, a type of the device, an address of the device, an operator to which the device belongs, a name of a service that can be supported by the device, and a dedicated filtering parameter of the device.

In a possible implementation, the information about the second device is used to subscribe to and notify the target subscription device of the second device.

The target subscription device of the second device is a device that the second device requests to subscribe to. Subscribing to and notifying the target subscription device of the second device may be understood as subscribing to a target subscription device parameter of the target subscription device, and notifying the second device when the target subscription device parameter of the target subscription device is changed (modified, newly added, or the like).

In this case, the information about the second device includes an identifier and a target subscription device parameter of the second device, and the target subscription device parameter includes at least one of the following information: an area to which the target subscription device belongs, an identifier of the blockchain, a type of the target subscription device, an address of the target subscription device, an operator to which the target subscription device belongs, a list of services that can be supported by the target subscription device, and a dedicated registration parameter of the type of the target subscription device.

In a possible implementation, the information about the second device is used to perform remote attestation on the second device.

Performing remote attestation on the second device may be understood as determining whether the second device can implement trusted communication.

In this case, the information about the second device is attestation response information encrypted by the second device by using the private key of the second device, and the attestation response information includes a first random number and a measurement value of the second device.

S220: The first device writes the information about the second device into the blockchain.

In a possible implementation, the first device writes the information about the second device into the blockchain in the following data format: a data initiator, a data receiver, a data transaction type, a timestamp, the identifier of the blockchain, a validity period, data transaction content, and a data signature.

The data transaction type includes any one of the following: account provisioning of the second device, registration of the second device, discovery of a target device of the second device, subscription and notification of the target subscription device of the second device, and remote attestation of the second device.

For example, the first device writes the information about the second device into the blockchain in the following data format and content:

A data initiator is the second device, a data receiver is an NRF application contract address, a data transaction type is registration of the second device, a timestamp is a timestamp, the identifier of the blockchain is a BC instance ID, a validity period is timeout, data transaction content is the public key of the second device, the identifier of the second device, and a measurement reference value of the second device, and the data signature is a private key signature of the second device (that is, a signature on information of the second device by using the private key of the second device).

It should be noted that the foregoing manner in which the first device writes the information about the second device into the blockchain based on the data format is merely an example. This is not limited in this application.

It should be noted that, for a method for writing information into a blockchain, refer to a related technology of writing a transaction into a blockchain in the conventional technology, for example, writing a transaction into a blockchain by using consensus algorithm. The method for writing information into the blockchain is not limited in this application.

Optionally, in S230, the first device sends response information.

Correspondingly, the second device receives the response information.

The response information indicates that the information about the second device has been written into the blockchain. In the foregoing solution, according to a blockchain technology, an NF instance and a service of the NF instance in a network are discovered according to a decentralization mechanism, and an NF instance and service discovery process is implemented in a distributed manner without affecting identity authentication or security, so that a system architecture is simple and maintenance is more convenient.

The foregoing describes the NF management method provided in this application with reference to FIG. 2. The following is based on FIG. 2 and with reference to FIG. 3 to FIG. 6. A process in which the first device performs different automated management on the second device (registration management on the second device, account provisioning on the second device, discovery of a target device of the second device, and subscription to a target subscription device of the second device) is described in detail.

FIG. 3 is a diagram of an NF management method 300 according to an embodiment of this application.

S310: A second device sends first information of the second device to a first device.

Correspondingly, the first device receives the first information from the second device.

It should be understood that the first information of the second device is determined by the second device.

The first information of the second device is used to perform registration management on the second device.

For example, the first device may be a device in a blockchain, the second device may be an NF, and the first device is configured to perform automated management on the second device according to a smart contract.

In a possible implementation, in a scenario in which the second device is registered, the first information of the second device includes registration information and signature information.

It should be noted that, for the first information of the second device, refer to related descriptions of the information about the second device in S210 when the information about the second device is used to register the second device. To avoid repetition, detailed descriptions thereof are omitted herein.

For example, content included in the registration information may be shown in Table 1.

**Table 1 Content of the registration information**

| Attribute name | Description |
|---|---|
| Area (area) to which the second device belongs | Area to which the NF belongs |
| Identifier of the blockchain (BC instance id, | Chain ID |
| BC ID) | |
| Identifier of the second device (nfInstanceID) | Unique identifier of an NF instance |
| Type of the second device (nfType) | NF type, for example, SMF/AMF/AUSF/PCF/UPF |
| Status of the second device (nfStatus) | Status of the NF instance (registered (registered) state, suspended (suspended) state, or undiscoverable (undiscoverable) state) |
| Fully qualified domain name (full qualified domain name, FQDN) of the second device | Full qualified domain name |
| Address of the second device (IPv4 address) | NF IPv4 address |
| Address of the second device (IPv6 address) | NF IPv6 address |
| Operator (operator) to which the second device belongs | Operator to which the NF belongs |
| Service that can be supported by the second device (nfServices) | Service supported by the NF. Different NFs support different services |
| Dedicated registration parameter of the type of the second device (nfInfo) | Dedicated registration parameter of the NF. Different types of NFs have different dedicated registration parameters |

In a possible implementation, in a scenario in which the registration information of the second device is updated (the second device updates the registration information), the first information of the second device includes the identifier of the second device, updated registration information, and signature information.

Specifically, after the second device has been registered, or when the second device is a device that has been registered in the blockchain, the first information received by the first device from the second device may include the identifier of the second device, updated registration information, and the signature information. The updated registration information is information obtained after one or more pieces of information in the initial registration information (for example, the registration information in S310) of the second device that is stored in the blockchain are updated. For example, the status of the second device in the updated registration information is different from the status of the second device in the initial registration information.

In a possible implementation, in a scenario in which the second device is deregistered (or cancelled), the first information of the second device includes the identifier of the second device, the status of the second device, and the signature information. The status of the second device is an undiscoverable (undiscoverable) state.

Optionally, when the first information of the second device includes the registration information, the method 300 may further include S320 and S330.

S320: The first device obtains a public key of the second device.

In a possible implementation, the first device obtains the public key of the second device from the blockchain.

It should be noted that a sequence of S310 and S320 is not limited in this application. For example, S310 may be performed before S320, or S320 may be performed before S310, or S310 and S320 may be simultaneously performed.

S330: The first device verifies the signature information by using the public key of the second device.

Specifically, after obtaining the public key of the second device, the first device verifies the signature information in the received first information of the second device by using the public key of the second device.

Further, after receiving the first information of the second device, the first device writes the first information of the second device into the blockchain, and the method 300 further includes S340.

S340: The first device writes the first information of the second device into the blockchain.

In a possible implementation, the first device writes the first information of the second device into the blockchain according to a blockchain consensus algorithm.

In a possible implementation, in a scenario in which the second device is registered (in this case, the first information of the second device includes the registration information), if the first device successfully verifies the signature information in S330, the first device writes the registration information into the blockchain.

For example, the first device writes the registration information into the blockchain in the following data format:

A data initiator is the second device, a data receiver is an NRF application contract address, a data transaction type is registration of the second device, a timestamp is a timestamp, the identifier of the blockchain is a BC instance ID, a validity period is timeout, data transaction content is registration information, and a data signature is a private key signature of the second device.

In a possible implementation, in a scenario in which the registration information of the second device is updated (in this case, the first information of the second device includes the updated registration information), the first device writes the identifier of the second device and the updated registration information into the blockchain.

For example, the first device writes the identifier of the second device and the updated registration information into the blockchain in the following data format:

A data initiator is the second device, a data receiver is an NRF application contract address, a data transaction type is registration and update, a timestamp is a timestamp, the identifier of the blockchain is a BC instance ID, a validity period is timeout, a data transaction content is the identifier of the second device and the updated registration information, and a data signature is a private key signature of the second device.

In a possible implementation, in a scenario in which the second device is deregistered (or cancelled) (in this case, the first information of the second device includes a status of the second device, and the status of the second device is an undiscoverable state), the first device writes the identifier of the second device and the status of the second device that is the undiscoverable state into the blockchain.

For example, the first device writes the identifier of the second device and the status of the second device being the undiscoverable state into the blockchain based on the following data format:

A data initiator is the second device, a data receiver is an NRF application contract address, a data transaction type is deregistration of the second device, a timestamp is a timestamp, the identifier of the blockchain is a BC instance ID, a validity period is timeout, data transaction content is the identifier of the second device and the status of the second device, and a data signature is a private key signature of the second device.

It should be understood that, that the status of the second device is the undiscoverable state may be understood as that the second device is in a deregistered state.

It should be noted that the first device may further determine, based on heartbeat information (heartbeat message), whether the second device has been deregistered.

Specifically, if the first device does not receive heartbeat information from the second device within a period of time, and the heartbeat information indicates that the second device operates normally, the first device sends the first information of the second device to another device in the blockchain. The first information of the second device includes the identifier of the second device, the status of the second device (the status of the second device is an undiscoverable state), and signature information. Further, the first device writes the status of the second device that is in the unavailable state into the blockchain according to a consensus mechanism of the blockchain.

It should be noted that, for a method for writing the first information of the second device into the blockchain by the first device in S340, refer to the description in S220. Details are not described herein again.

Optionally, in S350, the first device sends response information to the second device.

Correspondingly, the second device receives the response information from the first device.

The response information indicates that the first device successfully receives the first information of the second device, or indicates that the first information of the second device has been written into the blockchain.

In the foregoing solution, NF registration management is performed based on a network architecture in which an NF instance and a service of the NF instance in a network are discovered by using a blockchain technology, so that NF management is more secure and convenient without affecting identity authentication or security.

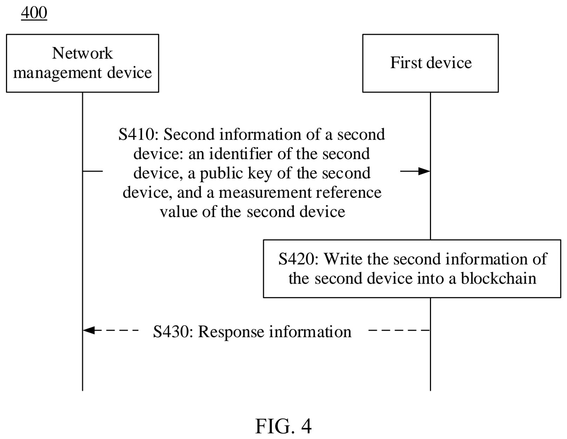

FIG. 4 is a diagram of an NF management method 400 according to an embodiment of this application.

S410: A network management device sends second information of a second device to a first device.

Correspondingly, the first device receives the second information of the second device from the network management device.

It should be understood that the second information of the second device is determined by the network management device.

The second information of the second device is used to perform account provisioning on the second device.

For example, the first device may be a device in a blockchain, the network management device may be an OAM, the second device may be an NF, and the first device is configured to perform automated management on the second device according to a smart contract.

In a possible implementation, the second information of the second device includes an identifier of the second device, a public key of the second device, and a measurement reference value of the second device.

The measurement reference value of the second device is used to verify reliability and integrity of the device. For example, the measurement reference value of the second device is a trusted measurement value stored in a PCR, and may be specifically a hash value. This is not limited in this application.

For example, the second device signs the second information of the second device by using the private key of the second device, to form a private key signature of the second device, and sends the private key signature to the first device.

S420: The first device writes the second information of the second device into the blockchain.

In a possible implementation, the first device writes the second information (the identifier of the second device, the public key of the second device, and the measurement reference value of the second device) of the second device into the blockchain in the following data format:

A data initiator is an OAM, a data receiver is an NRF application contract address, a data transaction type is account provisioning of the second device, a timestamp is a timestamp, an identifier of the blockchain is a BC instance ID, a validity period is timeout, data transaction content is the identifier of the second device, the public key of the second device, and the measurement reference value of the second device, and a data signature is a private key signature of the OAM. It should be understood that the private key signature of the OAM is used to sign the second information of the second device.

It should be noted that, for a method for writing the second information of the second device into the blockchain by the first device in S420, refer to the description in S220. Details are not described herein again.

Optionally, in S430, the first device sends response information to the network management device.

Correspondingly, the network management device receives the response information from the first device.

The response information indicates that the first device successfully receives the second information of the second device, or indicates that the second information of the second device has been written into the blockchain.

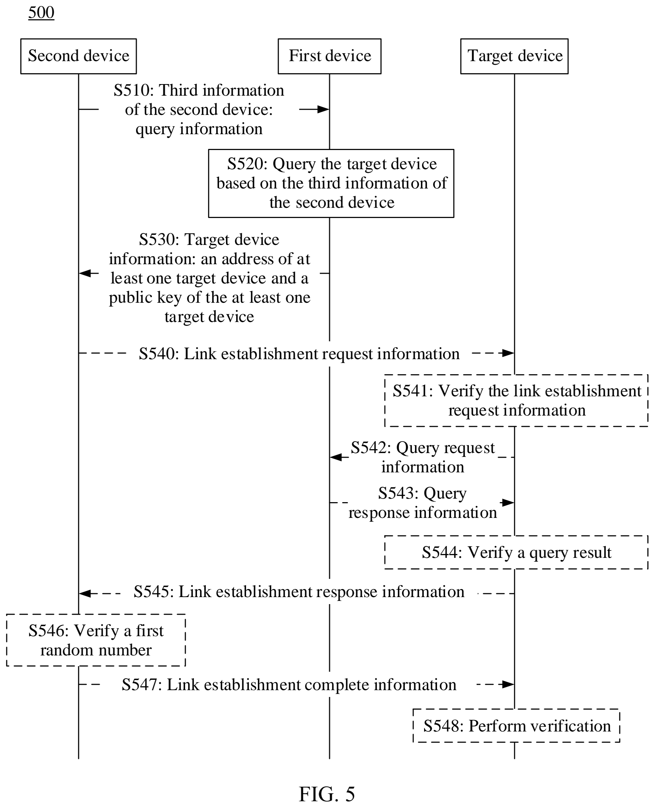

FIG. 5 is a diagram of an NF management method 500 according to an embodiment of this application.

S510: A second device sends third information of the second device to a first device.

Correspondingly, the first device receives the third information of the second device from the second device.

It should be understood that the third information of the second device is determined by the second device.

The third information of the second device is used to discover a target device of the second device.

The target device of the second device is a device that meets a query condition (query information) of the second device. Discovering the target device of the second device may be understood as querying, based on the query information, the device that meets the query condition of the second device in public information of a plurality of NFs stored in a blockchain, and the device is the target device of the second device.

For example, the first device may be a device in the blockchain, the second device may be an NF, and the first device is configured to perform automated management on the second device according to a smart contract.

In a possible implementation, the third information of the second device includes query information, and the query information includes at least one of the following information:
an area to which the device belongs, an identifier of the blockchain, a type of the device, an address of the device, an operator to which the device belongs, a name of a service that can be supported by the device, and a dedicated filtering parameter of the device.

S520: The first device queries the target device based on the third information of the second device.

Specifically, after receiving the query information, the first device queries, in the blockchain, a device that meets the query information, and determines the queried device as the target device.

S530: The first device sends target device information to the second device.

Correspondingly, the second device receives the target device information from the first device.

The target device information includes an address of at least one target device and a public key of the at least one target device.

It should be noted that, in a process of discovering the target device of the second device, a service communication proxy (service communication proxy, SCP) may further participate in the process of discovering the target device.

In a possible implementation, after the second device receives the target device information, the SCP may select the target device.

In a possible implementation, the SCP serves as an interaction agent between the first device and the second device. The second device requests, through the SCP, the first device to discover the target device. After the first device determines target device information (discovers the target device, or queries the target device), the SCP selects the target device and performs subsequent message routing.

Optionally, after receiving the target device information (or discovering the target device), the second device may establish a connection to the target device. The method 500 may further include S540 to S548.

S540: The second device sends link establishment request information to the target device.

Correspondingly, the target device receives the link establishment request information from the second device.

The link establishment request information is used to request to establish a connection between the second device and the target device, the link establishment request information includes an identifier of the second device, a public key of the second device, a first random number, and a signature of the second device, and the first random number is a random number generated by the second device.

For example, the second device signs the link establishment request information by using a private key of the second device, further encrypts the signed link establishment request information by using the public key of the target device, and sends the encrypted link establishment request information to the target device.

S541: The target device verifies the link establishment request information.

Specifically, after receiving the link establishment request information encrypted by the second device by using the public key of the target device, the target device decrypts the link establishment request information by using the private key of the target device, and further verifies the signature by using the public key of the second device.

S542: The target device sends query request information to the first device.

Correspondingly, the first device receives the query request information from the target device.

Specifically, when the target device successfully verifies a signature of the decrypted link establishment request information, the target device sends the query request information to the first device.

The query request information is used to request to query the public key of the second device, and the query request information includes the identifier of the second device.

S543: The first device sends query response information to the target device.

Correspondingly, the target device receives the query response information from the first device.

The query response information includes the identifier of the second device and the public key of the second device.

S544: The target device verifies a query result.

Specifically, the target device compares whether the public key of the second device obtained in S540 is the same as the public key of the second device in the response information received in S543.

S545: The target device sends link establishment response information to the second device.

Correspondingly, the second device receives the link establishment response information from the target device.

The link establishment response information includes a first random number and a second random number, and the second random number is a random number generated by the target device.

For example, when the public keys of the two second devices compared by the target device in S564 are the same, the target device encrypts the link establishment response information by using the public key of the second device, and sends the encrypted link establishment response information to the second device.

S546: The second device verifies the first random number.

Specifically, after receiving the link establishment response information encrypted by the target device by using the public key of the second device, the second device decrypts the link establishment response information by using the private key of the second device, and compares whether the first random number obtained through decryption is equal to the first random number locally stored in the second device.

Optionally, when the two first random numbers are equal, the second device derives a symmetric key by using the first random number and the second random number, where the symmetric key is used for integrity protection and encryption of data.

S547: The second device sends link establishment complete information to the target device.

Correspondingly, the target device receives the link establishment complete information from the second device.

The link establishment complete information indicates that the connection between the second device and the target device is successfully established, and the link establishment complete information includes a message hash value obtained through calculation by using the integrity algorithm and the key. It should be understood that the link establishment complete information is encrypted based on the first random number and the second random number.

S548: The target device performs verification.

Specifically, after receiving the link establishment complete information, the target device performs decryption and integrity check.

It should be noted that, in subsequent communication, the second device and the target device perform encryption and decryption by using a symmetric key.

It should be noted that, in a process in which the second device establishes the connection to the target device in S540 to S548, the second device may further communicate with the target device through the SCP. This is not limited in this application.

In the foregoing solution, based on a network architecture in which an NF instance and a service of the NF instance in a network are discovered by using a blockchain technology, a target device of the NF is discovered by using the network architecture without affecting identity authentication or security, so that management of the NF is more secure and convenient.

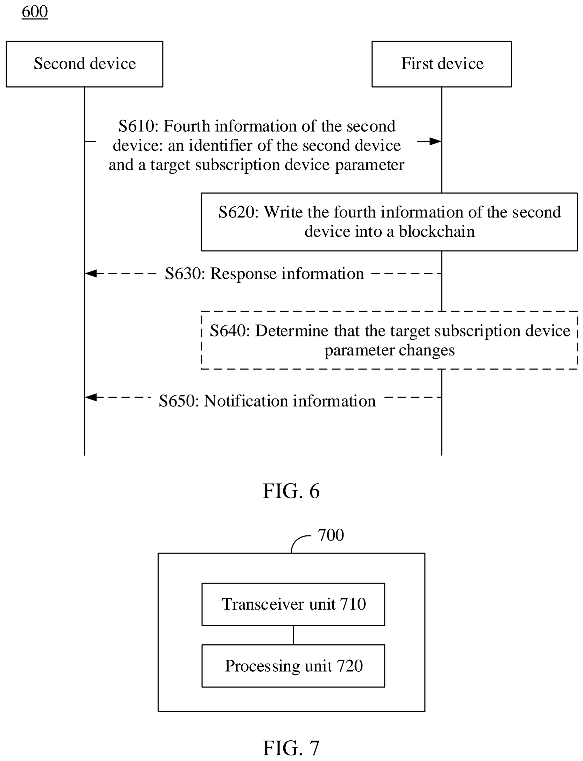

FIG. 6 is a diagram of an NF management method 600 according to an embodiment of this application.

S610: A second device sends fourth information of the second device to a first device.

Correspondingly, the first device receives the fourth information from the second device.

It should be understood that the fourth information of the second device is determined by the second device.

The fourth information of the second device is used to subscribe to a target subscription device of the second device.

The target subscription device of the second device is a device that the second device requests to subscribe to. Subscribing to and notifying the target subscription device of the second device may be understood as subscribing to a target subscription device parameter of the target subscription device, and notifying the second device when the target subscription device parameter of the target subscription device is changed (modified, newly added, or the like).

For example, the first device may be a device in a blockchain, the second device may be an NF, and the first device is configured to perform automated management on the second device according to a smart contract.

In a possible implementation, the fourth information of the second device includes an identifier and the target subscription device parameter of the second device. The target subscription device parameter includes at least one of the following information:
an area to which the target subscription device belongs, an identifier of the blockchain, a type of the target subscription device, an address of the target subscription device, an operator to which the target subscription device belongs, a list of services that can be supported by the target subscription device, and a dedicated registration parameter of the type of the target subscription device.

For example, content included in the target subscription device parameter may be shown in the following Table 2.

**Table 2 Content of the target subscription device parameter**

| Attribute name | Description |
|---|---|
| Area (area) to which the target subscription device belongs | Area to which the NF belongs |
| Identifier of the blockchain (BC instance id, BC ID) | Chain ID |
| Type of the target subscription device (nfType) | NF type, for example, SMF/AMF/AUSF/PCF/UPF/NEW (NEW indicates that a newly-added unknown NF type) |
| Address of the second device (IPv4 address) | NF IPv4 address |
| Address of the second device (IPv6 address) | NF IPv6 address |
| Operator (operator) to which the second device belongs | Operator to which the NF belongs |
| Service that can be supported by the second device (nfServices) | Service supported by the NF. Different NFs support different services |
| Dedicated registration parameter of the type of the second device (nfInfo) | Dedicated registration parameter of the NF. Different types of NFs have different dedicated registration parameters |

S620: The first device writes the fourth information of the second device into the blockchain.

In a possible implementation, the first device writes the fourth information (the identifier and the target subscription device parameter of the second device) of the second device into the blockchain in the following data format:

A data initiator is the second device, a data receiver is an NRF application contract address, a data transaction type is the target subscription device of the second device, a timestamp is a timestamp, the identifier of the blockchain is a BC instance ID, a validity period is timeout, data transaction content is the identifier and the target subscription device parameter of the second device, and a data signature is a private key signature of the second device.

Optionally, in S630, the first device sends response information to the second device.

Correspondingly, the second device receives the response information from the first device.

The response information indicates that the fourth information of the second device has been written into the blockchain.

Optionally, when the first device finds that the target subscription device parameter of the target subscription device changes, the first device can notify the second device. The method 600 may further include S640 and S650.

S640: The first device determines that the target subscription device parameter changes.

In a possible implementation, when the target subscription device sends updated registration information to the first device, the first device determines that the target subscription device parameter changes, and the first device writes the updated registration information of the target subscription device into the blockchain.

It should be noted that, that the target subscription device parameter changes may be understood as that a related parameter of the target subscription device stored in the blockchain changes. For example, the related parameter of the target subscription device is updated, or a parameter of the target subscription device is newly added. This is not limited in this application.

S650: The first device sends notification information to the second device.

Correspondingly, the second device receives the notification information from the first device.

The notification information indicates that the target subscription device parameter subscribed to by the second device changes, and the notification information includes an identifier of the target subscription parameter and modified information or newly added information of the target subscription device.

In the foregoing solution, based on a network architecture in which an NF instance and a service of the NF instance in a network are discovered by using a blockchain technology, a target subscription device of the NF is subscribed to and notified by using the network architecture without affecting identity authentication or security, so that management of the NF is more secure and convenient.

It may be understood that the examples in FIG. 2 to FIG. 6 in embodiments of this application are merely intended to help a person skilled in the art understand embodiments of this application, but are not intended to limit embodiments of this application to specific scenarios in the examples. Apparently, a person skilled in the art may make various equivalent modifications or changes based on the examples in FIG. 2 to FIG. 6, and such modifications or changes also fall within the scope of embodiments of this application.

It may be further understood that, in some scenarios, some optional features in embodiments of this application may be independently implemented without depending on another feature. Alternatively, in some scenarios, the optional features are combined with another feature. This is not limited.

It may be further understood that the solutions in embodiments of this application may be appropriately combined for use, and explanations or descriptions of terms in the embodiments may be mutually referred to or explained in the embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that some message names such as information about the second device or registration information, are involved in embodiments of this application. It should be understood that the names of the names do not limit the protection scope of embodiments of this application.

It may be further understood that, in the foregoing method embodiments, the method and the operation implemented by the first device may also be implemented by a component (for example, a chip or a circuit) of the first device. In addition, the method and the operation implemented by a second device may also be implemented by a component (for example, a chip or a circuit) of the second device. This is not limited. In correspondence to the methods provided in the foregoing method embodiments, embodiments of this application further provide a corresponding apparatus. The apparatus includes corresponding modules configured to perform the foregoing method embodiments. The module may be software, hardware, or a combination of the software and the hardware. It can be understood that the technical features described in the method embodiments are also applicable to the following apparatus embodiments.

It should be understood that the first device and the second device may perform a part or all of steps in the foregoing embodiments. These steps or operations are merely examples. In embodiments of this application, other operations or variations of various operations may be further performed. In addition, the steps may be performed in another sequence different from that presented in the foregoing embodiments, and not all the operations in the foregoing embodiments may be performed.

The foregoing describes in detail the NF management method provided in embodiments of this application with reference to FIG. 2 to FIG. 6. The following describes in detail the communication apparatuses provided in embodiments of this application with reference to FIG. 7 to FIG. 9. It should be understood that descriptions of apparatus embodiments correspond to the descriptions of the method embodiments. Therefore, for content that is not described in detail, refer to the foregoing method embodiments. For brevity, some content is not described again.

FIG. 7 is a block diagram of a communication apparatus according to an embodiment of this application. The apparatus 700 includes a transceiver unit 710 and a processing unit 720. The transceiver unit 710 may be configured to implement a corresponding communication function. The processing unit 720 may be configured to perform data processing. In other words, the transceiver unit 710 is configured to perform receiving and sending-related operations, and the processing unit 720 is configured to perform an operation other than receiving and sending. The transceiver unit 710 may also be referred to as a communication interface or a communication unit.

Optionally, the apparatus 700 further includes a storage unit. The storage unit may be configured to store instructions and/or data. The processing unit 720 may read the instructions and/or the data in the storage unit, so that the apparatus implements actions of different devices in the foregoing method embodiments. For example, an action of the first device, the second device, or the network management device.

The apparatus 700 may be configured to perform actions performed by the first device, the second device, and the network management device in the foregoing method embodiments. In this case, the apparatus 700 may be the first device, the second device, the network management device, or a component of the first device, the second device, or the network management device. The transceiver unit 710 is configured to perform receiving and sending-related operations of the first device, the second device, and the network management device in the foregoing method embodiments. The processing unit 720 is configured to perform a processing-related operation of the first device, the second device, and the network management device in the foregoing method embodiments.

In a possible implementation, the transceiver unit 710 is configured to receive information about the second device. The processing unit 720 is configured to write the information about the second device into a blockchain.

In another possible implementation, the processing unit 720 is configured to determine the information about the second device. The transceiver unit 710 is configured to send information about a communication device to the first device. It should be further understood that the apparatus 700 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 700 may be specifically the first device, the second device, or the network management device in the foregoing embodiments, and may be configured to perform procedures and/or steps corresponding to the first device, the second device, and the network management device in the foregoing method embodiments; or the apparatus 700 may be specifically the first device, the second device, and the network management device in the foregoing embodiments, and may be configured to perform procedures and/or steps corresponding to the first device, the second device, and the network management device in the foregoing method embodiments. To avoid repetition, details are not described herein again.

The apparatus 700 in each of the foregoing solutions has functions of implementing corresponding steps performed by the first device, the second device, and the network management device in the foregoing method, or the apparatus 700 in each of the foregoing solutions has functions of implementing corresponding steps performed by the first device, the second device, and the network management device in the foregoing method. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving/sending operations and a related processing operation in the method embodiments.

In addition, the transceiver unit 710 may alternatively be a transceiver circuit (for example, may include a receiver circuit and a transmitter circuit), and the processing unit may be a processing circuit.

It should be noted that the apparatus in FIG. 7 may be a network element or a device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

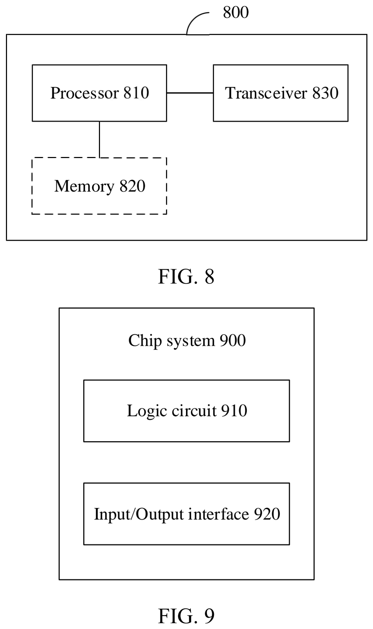

As shown in FIG. 8, an embodiment of this application provides another communication apparatus 800. The apparatus 800 includes a processor 810. The processor 810 is coupled to the memory 820. The memory 820 is configured to store a computer program or instructions and/or data. The processor 810 is configured to: execute the computer program or the instructions stored in the memory 820, or read the data stored in the memory 820, to perform the methods in the foregoing method embodiments. The apparatus 800 further includes a transceiver 830, and the transceiver 830 is configured to receive a signal and/or send a signal. For example, the processor 810 is configured to control the transceiver 830 to receive and/or send a signal.

Optionally, there are one or more processors 810.

Optionally, there are one or more memories 820.

Optionally, the memory 820 and the processor 810 are integrated together, or are disposed separately.

In a solution, the apparatus 800 is configured to implement operations performed by the first device, the second device, or the network management device in the foregoing method embodiments.

For example, the processor 810 is configured to execute the computer program or the instructions stored in the memory 820, to implement related operations of the first device in the foregoing method embodiments, for example, the method implemented by the first device in any one of the embodiments shown in FIG. 2 to FIG. 6, or the method implemented by the first device in any one of the embodiments shown in FIG. 2 to FIG. 6.

For example, the processor 810 is configured to execute the computer program or the instructions stored in the memory 820, to implement related operations of the second device in the foregoing method embodiments, for example, the method implemented by the second device in any one of the embodiments shown in FIG. 2, FIG. 3, FIG. 5, and FIG. 6, or the method implemented by the second device in any one of the embodiments shown in FIG. 2, FIG. 3, FIG. 5, and FIG. 6.

For example, the processor 810 is configured to execute the computer program or instructions stored in the memory 820, to implement related operations of the network management device in the foregoing embodiment, for example, the network management device in FIG. 4, or the method implemented by the network management device in FIG. 4.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware assembly, or the like. The general-purpose processor may be a microprocessor, or the processor may be any conventional processor or the like.

It should be further understood that the storage mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

As shown in FIG. 9, an embodiment of this application provides a chip system 900. The chip system 900 (or may also be referred to as a processing system) includes a logic circuit 910 and an input/output interface (input/output interface) 920.

The logic circuit 910 may be a processing circuit in the chip system 900. The logic circuit 910 may be coupled to a storage unit, and invoke instructions in the storage unit, so that the chip system 900 can implement the methods and functions in embodiments of this application. The input/output interface 920 may be an input/output circuit in the chip system 900, and outputs information processed by the chip system 900, or inputs to-be-processed data or signaling information to the chip system 900 for processing.

In a solution, the chip system 900 is configured to implement operations performed by the first device, the second device, or the network management device in the foregoing method embodiments.

For example, the logic circuit 910 is configured to implement a processing-related operation of the first device in the foregoing method embodiments, for example, a processing-related operation of the first device in any one of the embodiments shown in FIG. 2 to FIG. 6. The input/output interface 920 is configured to implement a sending and/or receiving-related operation performed by the first device in the foregoing method embodiments, for example, a sending and/or receiving-related operation performed by the first device in any one of the embodiments shown in FIG. 2 to FIG. 6.

For example, the logic circuit 910 is configured to implement a processing-related operation of the second device in the foregoing method embodiments, for example, a processing-related operation of the second device in any one of the embodiments shown in FIG. 2, FIG. 3, FIG. 5, and FIG. 6. The input/output interface 920 is configured to implement a sending and/or receiving-related operation performed by the second device in the foregoing method embodiments, for example, a sending and/or receiving-related operation performed by the second device in any one of the embodiments shown in FIG. 2, FIG. 3, FIG. 5, and FIG. 6.

For example, the logic circuit 910 is configured to implement a processing-related operation of the network management device in the foregoing method embodiments, for example, a processing-related operation of the network management device in FIG. 4. The input/output interface 920 is configured to implement a sending and/or receiving-related operation performed by the network management device in the foregoing method embodiments, for example, a sending and/or receiving-related operation performed by the network management device in FIG. 4.

An embodiment of this application further provides a computer-readable storage medium. The computer-readable storage medium stores computer instructions used to implement the method performed by the first device, the second device, or the network management device in the foregoing method embodiments.

For example, when a computer program is executed by a computer, the computer is enabled to implement the methods executed by the first device, the second device, or the network management device in the foregoing method embodiments.

An embodiment of this application further provides a computer program product, including instructions. When the instructions are executed by a computer, the method performed by the first device, the second device, or the network management device in the foregoing method embodiments is implemented.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium includes but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network function management method, comprising:
receiving, by a first device, information about a second device, wherein the first device is a device in a blockchain, the second device is a network function entity, and the first device is configured to perform automated management on the second device according to a smart contract; and
writing, by the first device, the information about the second device into the blockchain.

2. The method according to claim 1, wherein the information about the second device comprises registration information and signature information, the signature information is a signature of the information about the second device by using a private key of the second device, the information about the second device is used to register the second device, and the method further comprises:
verifying, by the first device, the signature information by using an obtained public key of the second device; and
writing, by the first device, the information about the second device into the blockchain comprises:
when the first device successfully verifies the signature information, writing, by the first device, the registration information into the blockchain, wherein the registration information comprises an area to which the second device belongs, an identifier of the blockchain, an identifier of the second device, a type of the second device, a status of the second device, and at least one of the following information: a full qualified domain name of the second device, an address of the second device, an operator to which the second device belongs, a service that can be supported by the second device, or a dedicated registration parameter of the type of the second device.

3. The method according to claim 1, wherein the information about the second device comprises a public key of the second device, an identifier of the second device, and a measurement reference value of the second device; and
receiving, by the first device, the information about the second device comprises:
receiving, by the first device, the information about the second device from a network management device, wherein the information about the second device is used to perform account provisioning on the second device.

4. The method according to claim 1, wherein the information about the second device comprises query information, the information about the second device is used to discover a target device of the second device, and the method further comprises:
querying, by the first device, the target device based on the query information; and
sending, by the first device, an address of the target device and a public key of the target device, wherein
the query information comprises at least one of the following information:
an area to which the device belongs, an identifier of the blockchain, a type of the device, an address of the device, an operator to which the device belongs, a name of a service that can be supported by the device, and a dedicated filtering parameter of the device.

5. The method according to claim 1, wherein the information about the second device comprises an identifier and a target subscription device parameter of the second device, the information about the second device is used to subscribe to a target subscription device of the second device, and the target subscription device parameter comprises at least one of the following information:
an area to which the target subscription device belongs, an identifier of the blockchain, a type of the target subscription device, an address of the target subscription device, an operator to which the target subscription device belongs, a list of services that can be supported by the target subscription device, and a dedicated registration parameter of the type of the target subscription device.

6. The method according to claim 5, wherein when the first device determines that the target subscription device parameter changes, the method further comprises:
sending, by the first device, notification information, wherein the notification information indicates that the target subscription device parameter changes, and the notification information comprises an identifier of the target subscription device and a modified field in the target subscription device parameter.

7. The method according to any one of claims 1 to 6, wherein writing, by the first device, the information about the second device into the blockchain comprises:
writing, by the first device, the information about the second device into the blockchain in the following data format: a data initiator, a data receiver, a data transaction type, a timestamp, the identifier of the blockchain, a validity period, data transaction content, and a data signature, wherein
the data transaction type comprises any one of the following:
account provisioning of the second device, registration of the second device, discovery of the target device of the second device, subscription and notification of the target subscription device of the second device, and remote attestation of the second device.

8. The method according to any one of claims 1 to 7, wherein the method further comprises:
sending, by the first device, response information, wherein the response information indicates that the first device successfully receives the information about the second device, or indicates that the information about the second device has been written into the blockchain.

9. A network function management method, comprising:
determining, by a second device, information about the second device; and
sending, by the second device, the information about the second device to a first device, wherein the first device is a device in a blockchain, the second device is a network function entity, and the first device is configured to perform automated management on the second device according to a smart contract.

10. The method according to claim 9, wherein the information about the second device comprises registration information and signature information, the information about the second device is used to register the second device, the signature information is a signature of the information about the second device by using a private key of the second device, and the registration information comprises an area to which the second device belongs, an identifier of the blockchain, an identifier of the second device, a type of the second device, a status of the second device, and at least one of the following information:
a full qualified domain name of the second device, an address of the second device, an operator to which the second device belongs, a service that can be supported by the second device, or a dedicated registration parameter of the type of the second device.

11. The method according to claim 9, wherein the information about the second device comprises query information, the information about the second device is used to discover a target device of the second device, and the query information comprises at least one of the following information:
an area to which the device belongs, an identifier of the blockchain, a type of the device, an address of the device, an operator to which the device belongs, a name of a service that can be supported by the device, and a dedicated filtering parameter of the device, wherein
the response information comprises the address of the device and a public key of the device.

12. The method according to claim 9, wherein the information about the second device comprises an identifier and a target subscription device parameter of the second device, the information about the second device is used to subscribe to a target subscription device of the second device, and the target subscription device parameter comprises at least one of the following information:
an area to which the target subscription device belongs, an identifier of the blockchain, a type of the target subscription device, an address of the target subscription device, an operator to which the target subscription device belongs, a list of services that can be supported by the target subscription device, and a dedicated registration parameter of the type of the target subscription device.

13. The method according to claim 12, wherein the method further comprises:
receiving, by the second device, notification information from the first device, wherein the notification information indicates that the target subscription device parameter changes, and the notification information comprises an identifier of the target subscription device and a modified field in the target subscription device parameter.

14. The method according to any one of claims 9 to 13, wherein the method further comprises:
receiving, by the second device, response information, wherein the response information indicates that the first device successfully receives the information about the second device, or indicates that the information about the second device has been written into the blockchain.

15. A communication system, comprising a first device and a second device, wherein the first device is configured to perform the method according to any one of claims 1 to 8, and the second device is configured to perform the method according to any one of claims 9 to 14.

16. A communication apparatus, comprising:
a processor, configured to execute a computer program stored in a memory, to enable the communication apparatus to perform the method according to any one of claims 1 to 14.

17. A computer-readable storage medium, wherein the computer-readable storage medium stores a computer program or instructions, and when the computer program or the instructions are executed by a processor, the method according to any one of claims 1 to 14 is performed.

18. A computer program product comprising instructions, wherein when the computer program product runs on a computer, the method according to any one of claims 1 to 14 is performed.

19. A chip system, comprising a processor, configured to invoke a computer program or instructions from a memory and run the computer program or the instructions, to enable a communication apparatus in which the chip system is installed to implement the method according to any one of claims 1 to 14.
